# EUROPÄISCHE PATENTANMELDUNG

(11) **EP 1 483 954 A1**
(43) Veröffentlichungstag der Anmeldung: **08.12.2004**
(21) Anmeldenummer: 04011724.4
(22) Anmeldetag: 18.05.2004
(51) Int. Cl.: A01D 43/077, A01D 43/063

(54) **Antriebseinheit für eine Materialfördereinrichtung, die insbesondere für ein Grasaufnahmegerät vorgesehen ist**

(30) Priorität: 02.06.2003 DE 10325033
(71) Anmelder: Fritz Sperber GmbH & Co., 90765 Fürth (DE)
(72) Erfinder: Dürschinger, Wilhelm, 90766 Fürth (DE); Gerbig, Thomas, 91413 Neustadt an der Aisch (DE)
(74) Vertreter: Nordmann, Hardo

(57) **Zusammenfassung**

Die Materialfördereinrichtung (28) befindet sich vorzugsweise auf einem Fahrzeug. Sie wird eingangsseitig von einem Aufnahmegerät (20) mit stückigem Gut (m), wie Grasschnitt oder Laub, gespeist. Sie gibt dieses Gut (m) in einen ausgangsseitig angeschlossenen Behälter (36) ab. Die Materialfördereinrichtung (28) wird vom Fahrzeugmotor (14) mit Energie versorgt. Die Übertragung der Energie geschieht über eine Einrichtung (38), die einen Träger (40) und weitere Komponenten (z. B. 60, 86) zu einer Baueinheit (42) zusammenfasst. Diese Baueinheit (42) ist um eine am Grundrahmen (18) des Fahrzeugs angebrachte Drehachse (44) zwischen einer Arbeitsstellung und einer für Wartungsarbeiten geeigneten Zugangsstellung schwenkbar. In der Zugangsstellung lassen sich relativ einfach und zeitsparend Justierarbeiten durchführen.

## Beschreibung

Die Erfindung bezieht sich auf eine Einrichtung mit einer Anzahl von Komponenten zur Übertragung von Energie von einem Motor zu einer Materialfördereinrichtung, die eingangsseitig mit einem Aufnahmegerät für stückiges Material und ausgangsseitig mit einem Behälter verbunden ist, wobei ein Grundrahmen vorgesehen ist.

Das stückige Material kann hierbei Grasschnitt, Laub und Abfall, z. B. in Form von Papier- oder Holzschnitzeln, sein. Die hier betrachtete Materialfördereinrichtung ist auch unter dem Namen Turbine, Ladegebläse oder Sauggebläse bekannt. Solche Materialfördereinrichtungen werden insbesondere auch auf Fahrzeugen in der Landwirtschaft oder bei kommunalen Betrieben eingesetzt.

Im Handel ist unter dem Namen "SperberVan" (Firma Sperber Maschinenbau GmbH & Co., DE-90579 Langenzenn) ein Grasaufnahmefahrzeug erhältlich, das im Frontbereich ein Grasmähgerät, im mittleren seitlichen Bereich eine Materialfördereinrichtung (Turbine) für das erzeugte Mähgut, im hinteren oberen Bereich einen Aufnahmebehälter für das geförderte Mähgut und im hinteren unteren Bereich eine Einrichtung zur Übertragung von Drehenergie des Fahrzeugmotors zur Turbine besitzt. Diese Einrichtung ist auf dem Grundrahmen des Fahrzeugs angeordnet. Sie umfasst ein erstes Keilriemengetriebe, dessen erste Keilriemenscheibe über eine Zentrierhülse an die Kurbelwelle des Fahrzeugmotors angeschlossen ist und permanent mit dem Fahrzeugmotor mitläuft. Die zweite Keilriemenscheibe wird durch Anspannen eines mechanischen Hebels zum Mitlaufen gebracht. Die zweite Keilriemenscheibe treibt eine längere Welle an, die fest in einem Rahmen gehalten und gelagert ist. Diese Welle ihrerseits treibt die erste Keilriemenscheibe eines zweiten Keilriemengetriebes an, dessen zweite Keilriemenscheibe die Flügel der Turbine dreht. Beide Keilriemengetriebe sind mit Schutzkäfigen versehen.

Nun hat sich gezeigt, dass das Zentrieren der Kurbelwelle mit der Zentrierhülse relativ zeitaufwendig sein kann. Außerdem kann sich nach einiger Betriebszeit eine falsche Fluchtung der Welle bezüglich des Keilriemens einstellen. Die relativ schwere Welle kann zwar zum Justieren hin- und hergeschoben werden. Das Justieren erfordert aber viel Feingefühl, und eine weniger zeitaufwendige Einstellmöglichkeit wäre wünschenswert. Im harten Tagesbetrieb können Keilriemengetriebe verschleiß- und störanfällig sein. Dasselbe gilt für die mechanische Zuschaltung des ersten Riemengetriebes. Zwei solcher Getriebe haben eine erhöhte Störanfälligkeit zur Folge, und eine Lösung mit nur einem Keilriemengetriebe zur Energieübertragung wäre daher ebenfalls wünschenswert.

Aufgabe der vorliegenden Erfindung ist es demnach, eine Einrichtung der eingangs genannten Art so auszugestalten, dass sie relativ einfach aufgebaut ist, so dass Justierund Wartungsarbeiten wenig kompliziert und zeitaufwendig durchgeführt werden können.

Diese Aufgabe wird erfindungsgemäß dadurch gelöst, dass zumindest einige Komponenten der Einrichtung mit einem Träger zusammengefasst sind zu einer Baueinheit, die zwischen einer Arbeitsstellung und einer für Justierarbeiten geeigneten Zugangsstellung um eine am Grundrahmen angebrachte Drehachse schwenkbar ist.

Bei dieser Lösung sind im abgeschwenkten Zustand die am Träger befestigten Komponenten relativ einfach zugänglich, so dass die genanten Justier- und Wartungsarbeiten schnell und einfach durchgeführt werden können.

Bevorzugt ist die genannte Drehachse vertikal ausgerichtet.

Von besonderem Vorteil ist es, wenn die Baueinheit ein elastisches Verbindungselement zur Übertragung der Drehenergie des Motors auf eine der Komponenten besitzt. Dieses Verbindungselement dient zur weitgehenden Dämpfung bei der Weiterleitung von Schwingungen des Motors an die nachfolgenden Komponenten, so dass diese weniger beansprucht werden. Das elastische Verbindungselement sollte dazu allseitig elastisch sein. Es kann für diesen Zweck einen Gummikörper besitzen.

Als besonders geeignet zeichnet sich eine Reifenkupplung als elastisches Verbindungselement aus.

Die Konstruktion kann so gestaltet sein, dass das elastische Verbindungselement über eine Profilhülse mit der Achse des Motors in Verbindung gebracht werden kann. Beim Übergang von der Zugangsstellung in die Arbeitsstellung hat sich in diesem Zusammenhang ein Aufstecken bewährt.

Eine erste grundlegende Ausführungsform zeichnet sich dadurch aus, dass am Träger ein Keilriemengetriebe angeordnet ist, das einerseits über das elastische Verbindungselement mit dem Motor verbindbar ist und das andererseits über eine Gelenkwelle mit der Materialfördereinrichtung in Verbindung steht. Hierbei wird bevorzugt eine elektromagnetische Kupplung verwendet, die an der ersten Keilscheibe angeordnet ist. Diese Keilscheibe kann in die Kupplung einbezogen sein.

Eine zweite grundlegende Ausführungsform ist hydraulischer Natur. Sie zeichnet sich dadurch aus, dass am Träger eine Ölpumpe angeordnet ist, die über das elastische Verbindungselement mit dem Motor verbindbar und die über Versorgungsleitungen an einem Ölmotor angeschlossen ist, der zum Antrieb der Materialfördereinrichtung vorgesehen ist. Der Anschluß des Ölmotors an die Materialfördereinrichtung wird dabei zweckmäßigerweise über eine elastische Kupplung vorgenommen.

Der hier genannte Motor ist bei der bevorzugten Anwendung der Motor eines Traktors oder Reinigungsfahrzeugs, die Materialfördereinrichtung ist bevorzugt eine Turbine zum Fördern von Grasschnitt oder Laub, und/oder das Aufnahmegerät ist bevorzugt ein Mähwerk bzw. ein Laubsauger.

Weitere vorteilhafte Ausgestaltungen sind in den Unteransprüchen gekennzeichnet.

Ausführungsbeispiele der Erfindung werden im folgenden anhand von zwei Figuren näher erläutert. Es zeigen:
Fig. 1 ein Grasaufnahmefahrzeug mit einer Energieübertragungseinrichtung, die von nur einem einzigen Keilriemengetriebe Gebrauch macht, und
Fig. 2 ein Grasaufnahmefahrzeug, bei dem eine hydraulische Energieübertragung zur Anwendung kommt.

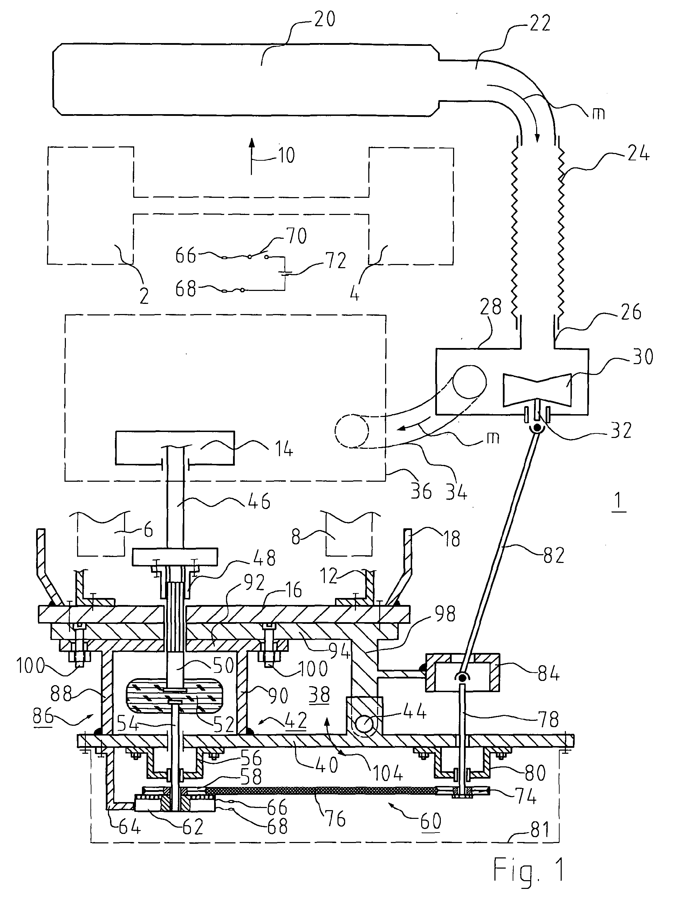

In Fig. 1 ist schematisch ein Grasaufnahmefahrzeug 1 dargestellt. Das Fahrzeug 1 umfasst einen (nicht gezeigten) Fahrersitz, von dem aus alle Arbeitsgänge gesteuert werden können. Es umfasst weiter zwei gestrichelt dargestellte Vorderräder 2 und 4 sowie zwei aus Übersichtsgründen nur teilweise dargestellte Hinterräder 6 und 8. Die Vorwärts-Fahrtrichtung ist durch einen Pfeil 10 markiert. Ein Fahrzeugrahmen 12 trägt über nicht gezeigte Bauelemente einen Motor 14. Am Fahrzeugrahmen 12 ist direkt oder - wie dargestellt - über eine Motorschildplatte 16 ein Grundrahmen 18 befestigt. Eine Befestigung ist hier und im folgenden häufig jeweils durch ein T-förmiges Schraubensymbol verdeutlicht.

Das Grasaufnahmegerät 1 besitzt im Frontbereich ein Aufnahmegerät 20 zur Erzeugung und Aufnahme stückigen Materials m in Form eines Mähwerks. Das aufgenommene Mähgut m wird über einen Kanal 22, einen Schlauch 24 und einen Einlassstutzen 26 einer Materialfördereinrichtung 28 bekannter Bauart zugeführt. Solche Materialfördereinrichtungen 28 sind, wie erwähnt, auch unter dem Namen Ladegebläse, Sauggebläse oder Turbine bekannt. Sie dienen zum Ansaugen von stückigem Gut m und Luft und sind auch zum Zerkleinern des stückigen Guts m geeignet. Speziell kann es sich hier um ein Radialgebläse handeln. Die Einrichtung 28 besitzt Ventilator-Flügel 30, die von einer Antriebswelle 32 angetrieben werden. Das zerkleinerte Material m wird über einen ausgangsseitig angebrachten Zuleit-Schlauch 34 einem gestrichelt gezeichneten Behälter 36 zugeführt. Hierbei kann es sich bevorzugt um einen Hochentleerungsbehälter handeln.

Die Antriebswelle 32 wird vorliegend mit Drehenergie vom Motor 14 versorgt. Dazu dient eine allgemein mit 38 bezeichnete Einrichtung zur Energieübertragung, die eine Anzahl von Bauelementen oder Komponenten besitzt. Mehrere dieser Komponenten sind, wie im folgenden deutlich wird, an einem Träger 40, beispielsweise im wesentlichen in Form einer Stange oder Platte aus Metall wie Stahl, zu einer wegklappbaren oder schwenkbaren Baueinheit 42 zusammengefaßt. Diese Baueinheit 42 ist zwischen einer Arbeitsstellung, in der die Drehenergie-Übertragung stattfindet, und einer Zugangsstellung, in der Montage-, Wartungs- und/oder Justierarbeiten durchgeführt werden können, um eine am Fahrzeugrahmen 12 oder - wie hier - am Grundrahmen 18 direkt oder indirekt angebrachte Drehachse 44 dreh- oder schwenkbar. Die Drehachse 44 ist vertikal ausgerichtet und steht also in Fig. 1 senkrecht auf der Papierebene.

Am Flansch der vom Motor 14 horizontal ausgehenden Kurbelwelle 46 ist der Flansch einer innen mit Profil versehenen Hohlwelle, die hier als Antriebs-Profilhülse 48 bezeichnet wird, angeschlossen. In diese Hülse 48 greift in der Arbeitsstellung das eine Ende einer außen mit einem entsprechenden Profil versehenen Achse, die hier als Profilwelle 50 bezeichnet wird, ein. Dieses Ende ist also in die Profilhülse 48 einsteckbar. Die Profilwelle 50 greift dazu durch Öffnungen von drei Bauteilen hindurch, die später noch näher erläutert werden.

Das andere Ende der Profilwelle 50 ist in einem elastischen Verbindungselement 52 festgehalten. Das Verbindungselement 52 besitzt einen Gummikörper und ist hier speziell als sogenannte Reifenkupplung ausgebildet. Es erfüllt in gewissem Maße die Funktion eines Gelenks und die eines Schwingungsdämpfungsgliedes. Es nimmt also horizontale und vertikale Schwingungen und solche in Längsrichtung auf.

Fluchtend zur Profilwelle 50 ist im elastischen Verbindungselement 52 das eine Ende einer Welle 54 festgehalten. Dieses Ende und das Ende der Profilwelle 50 können im Gummikörper des Verbindungselements 52 jeweils - wie gezeigt - mit einer Endplatte versehen sein.

Die Welle 54 greift durch eine Öffnung des Trägers 40 hindurch und ist in einer Lagerhülse oder einem Lagerflansch 56 gelagert, der außen am Träger 40 befestigt ist. Auf dieser Welle 54 sitzt die erste Keilriemenscheibe 58 eines Keilriemengetriebes 60.

Es muß hervorgehoben werden, dass vorliegend nur ein einziges Keilriemengetriebe 60 vorhanden ist. Das andere Ende der Welle 54 ist belegt mit einer an sich bekannten (z. B. Fa. Warner, USA) scheibenförmigen elektromagnetischen Kupplung 62, die von einem Arm 64 am Träger 40 festgehalten wird. Die elektrischen Anschlüsse der Kupplung 62 sind mit 66 und 68 bezeichnet. Wie im oberen Teil von Fig. 1 deutlich wird, kann die Kupplung 62 durch Schließen eines Schalters 70 von der Bordbatterie 72 des Fahrzeugs aktiviert werden. Der Schalter 70 ist nahe des Fahrersitzes untergebracht.

Es ist festzuhalten: Bei Betrieb des Motors 14 laufen die Kurbelwelle 46, die Antriebs-Profilhülse 48, das elastische Verbindungselement 52 und die Welle 54 ständig mit, und zwar mit relativ hoher Geschwindigkeit. Sobald der Schalter 70 geschlossen wird, greift die Kupplung 62, so dass nun auch die erste Keilriemenscheibe 58 mit der relativ hohen Drehgeschwindigkeit umläuft.

Zum Keilriemengetriebe 60 gehören noch eine zweite Keilriemenscheibe 74, die in einigem Abstand platziert ist, und mindestens ein Keilriemen 76. Mittels einer nicht gezeigten Spannvorrichtung kann der Keilriemen 76 bei Bedarf gespannt werden. Die zweite Keilriemenscheibe 74 dient zum Antrieb einer Drehwelle 78, ist am einen Ende derselben befestigt und ist in einem außen am Träger 40 fest angeordneten Lagerflansch 80 gelagert. Die Drehwelle 78 liegt senkrecht zu und rechts neben der Drehachse 44. Sie greift durch eine Öffnung des Trägers 40 hindurch in Richtung auf die Materialfördereinrichtung 28. Eine Schutzeinrichtung 81, zum Beispiel in Form eines Schutzgitters oder Schutzkäfigs, überspannt sämtliche Komponenten, die an der Frontseite des Trägers 40 angeordnet sind.

Das andere Ende der Drehwelle 78 ist am ersten endseitig angebrachten Gelenk einer Gelenkwelle 82 befestigt. Diese Gelenkwelle 82 ist hier etwas schräg ausgerichtet. Das zweite endseitig angebrachte Gelenk der Gelenkwelle 82 ist an der Antriebswelle 32 der Materialfördereinrichtung 28 befestigt. Von Bedeutung ist, dass eine solche Gelenkwelle 82 im gewissen Maße längsverschiebbar (längenverstellbar) und abwinkelbar (verkippbar) ist. Diese Eigenschaften macht man sich vorliegend beim Schwenken zunutze.

Zum Schutz des Wartungspersonals ist am ersten Gelenk der Gelenkwelle 82 ein hinten und vorne offenes Schutzgehäuse 84 angebracht. Es ist örtlich festgehalten, also fixiert, d. h. direkt oder indirekt mit dem Grundrahmen 18 verbunden. Zusätzlich kann ein (nicht gezeigter) Schutzschlauch über der Gelenkwelle 82 angeordnet sein.

Wie dargestellt, ist das elastische Verbindungselement 52 in einem Schutzrahmen oder Gehäuse 86 untergebracht. Dieses Gehäuse 86 ist am Träger 40 befestigt. Es stellt eine kastenförmige Zentrierhalterung dar. Anstelle der eingezeichneten Schweißstellen können zu Befestigung natürlich auch lösbare Mittel, also z. B. Schrauben und Muttern verwendet werden. Das Gehäuse 86 wird gebildet von einer linken und rechten Seitenwand 88 bzw. 90 und einer Rückwand 92. In der in Fig. 1 dargestellten Arbeitsstellung lehnt sich diese Rückwand 92 an einer Haltewand 94 an, die über die Motorschildplatte 16 am Fahrzeugrahmen 12 und am Grundrahmen 18 befestigt ist. An einem Seitenarm 98 der Haltewand 94 sind die Drehachse 44 angeordnet und das Schutzgehäuse 84 befestigt. Die Haltewand 94 kann u. U. entfallen. Dann lehnt sich die Rückwand 92 direkt an die feststehende Motorschildplatte 16 an, und der Seitenarm 98 ist an dieser Platte 16 angeordnet

In der Arbeitsstellung wird die Rückwand 92 zentriert und fixiert. Hierzu dienen zwei Zentrier- oder Stehbolzen 100, die in der Haltewand 94 mit ihren Köpfen festgehalten sind, und zwei darauf angeordnete Muttern. Erkennbar sind die Stehbolzen 100 durch zwei auf der Rückseite angeschrägte Zentrierlöcher hindurchgeführt. Das Gehäuse 86 nimmt so die Funktion der bereits erwähnten Zentrierhalterung an.

Beim Schwenken des Trägers 40 um die Drehachse 44 greifen die Bolzenenden gezielt in die angeschrägten Zentrierlöcher ein.

In Fig. 1 ist ein Doppelpfeil 104 eingezeichnet, der die Schwenkbewegung des Trägers 40 um die Drehachse 44 in beiden Richtungen verdeutlicht. Zum Übergang von der dargestellten Arbeitsstellung in die Zugangsstellung werden zunächst die beiden Muttern von den Bolzen 100 gelöst. Sodann wird - mittels eines nicht gezeigten Handgriffs - die gesamte Baueinheit 42, hier bestehend aus dem Träger 40 und den Komponenten 50, 52, 54, 56, 60, 78 und 80, 81, 86 nach Herausziehen der Profilwelle 50 aus der Profilhülse 48 um die Drehachse 44 (in Fig. 1 nach unten) geschwenkt. Dabei werden das Ende der Drehwelle 78 im Gehäuse 84 sowie das zugeordnete Gelenk der Gelenkwelle 82 mitbewegt.

Die in Fig. 1 in einer horizontalen Schnittdarstellung gezeigte wegklappbare Einrichtung zur Übertragung von Energie kann gegenüber herkömmlichen Einrichtungen erhebliche Vorteile aufweisen. Sie kommt mit nur einem einzigen Keilriemengetriebe aus, so dass sich eine Verringerung der (ohnehin geringen) Verletzungsgefahr ergibt. Der Keilriemen kann im geraden Zug einfach und zeitsparend gespannt werden. Das Keilriemengetriebe unterliegt so nur wenig dem Verschleiß. Die Montage, Demontage sowie Justierung sind einfach. Beim Wegklappen kann die Schutzeinrichtung 81 befestigt bleiben.

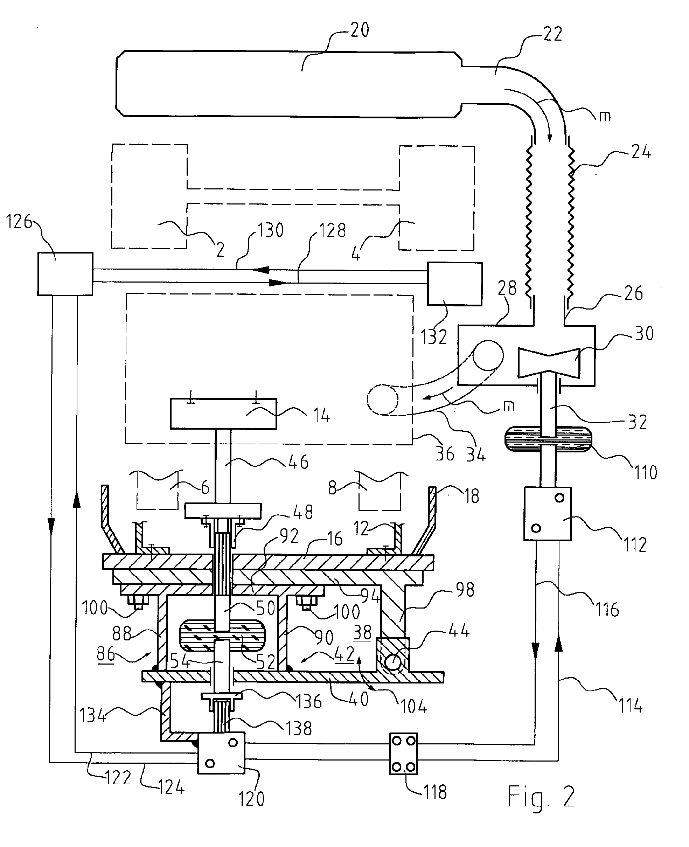

Das in Fig. 1 realisierte Prinzip der Schwenkbarkeit einer Baueinheit wird auch bei der ölhydraulischen Ausführungsform gemäß Fig. 2 angewendet. Bei der Beschreibung werden die gleichen Bezugszeichen für gleiche Bauelemente verwendet.

Gemäß Fig. 2 wird die Materialfördereinrichtung 28 über eine elastische Kupplung 110 von einem Ölmotor 112 angetrieben. Dieser Ölmotor 112 ist über Versorgungsleitungen 114 und 116 für den Zulauf bzw. Rücklauf und über Ventile 118 mit einer Ölpumpe 120 verbunden. Die Ölpumpe 120 ihrerseits steht über Ölleitungen 122, 124 mit einem ersten Öltank 126 sowie über Ölleitungen 128, 130 mit einem zweiten Öltank 132 in Verbindung.

Die Ölpumpe 120 ist mittels eines Haltearms 134 an einem Träger 40 festgehalten. Der Träger 40 ist auch hier wieder um eine vertikale Drehachse 44 schwenkbar. Diese Drehachse 44 ist an einem Seitenarm 98 befestigt, der Bestandteil des Grundrahmens 18 ist. Am Grundrahmen 18 wiederum ist der Motor 14 befestigt, was durch T-förmige Schrauben angedeutet ist.

Auch in diesem Fall ist ein Gehäuse 86 vorgesehen, in dem ein elastisches Verbindungsglied 52, vorzugsweise eine Reifenkupplung, angeordnet ist. In gleicher Weise greift eine Profilwelle 50 in der Arbeitsstellung in eine profilierte Hohlwelle 48 ein. Mit Hilfe von Bolzen 100 kann in der Arbeitsstellung die Rückwand 92 am Motorgehäuse oder am Rahmen 18 fixiert werden. Zwischen dem Verbindungselement 52 und der Ölpumpe 120 kann hier eine weitere profilierte Hohlwelle 136 angeordnet sein, in die eine weitere profilierte Welle 138, die direkt zum Antrieb der Ölpumpe 120 dient, eingreift. Erkennbar kann bei Bedarf und zu Wartungsarbeiten der Träger 40 mit den darauf befestigten Komponenten weggeschwenkt werden.

### Bezugszeichenliste

- 01: Grasaufnahmefahrzeug
- 02: Vorderrad
- 04: Vorderrad
- 06: Hinterrad
- 08: Hinterrad
- 10: Vorwärtsrichtung
- 12: Fahrzeugrahmen
- 14: Motor
- 16: Motorschildplatte
- 18: Grundrahmen
- 20: Aufnahmegerät
- 22: Kanal
- 24: Schlauch
- 26: Einlaßstutzen
- 28: Materialfördereinrichtung
- 30: Ventilator-Flügel
- 32: Antriebswelle
- 34: Zuleitschlauch
- 36: Behälter
- 3: 8 Einrichtung zur Energieübertragung
- 40: Träger
- 42: Baueinheit
- 44: Drehachse
- 46: Kurbelwelle
- 48: Antriebs-Profilhülse
- 50: Profilwelle
- 52: elastisches Verbindungselement
- 54: Welle
- 56: Lagerflansch
- 58: erste Keilriemenscheibe
- 60: Keilriemengetriebe
- 62: elektromagnetische Kupplung
- 64: Arm
- 66: elektrischer Anschluß
- 68: elektrischer Anschluß
- 70: Schalter
- 72: Bordbatterie
- 74: zweite Keilriemenscheibe
- 76: Keilriemen
- 78: Drehwelle
- 80: Lagerflansch
- 81: Schutzeinrichtung
- 82: Gelenkwelle
- 84: Schutzgehäuse
- 86: Gehäuse
- 88: linke Seitenwand
- 90: rechte Seitenwand
- 92: Rückwand
- 94: Haltewand
- 96: Mutter
- 98: Seitenarm
- 100: Stehbolzen
- 104: Doppelpfeil

- 110: elastische Kupplung
- 112: Ölmotor
- 114: Versorgungsleitung
- 116: Versorgungsleitung
- 118: Ventil
- 120: Ölpumpe
- 122: Ölleitung
- 124: Ölleitung
- 126: erster Öltank
- 128: Ölleitung
- 130: Ölleitung
- 132: zweiter Öltank
- 134: Haltearm
- 136: weitere Hohlwelle
- 138: profilierte Welle

- m: Material, Gut

## Patentansprüche

1. Einrichtung (38) mit einer Anzahl von Komponenten zur Übertragung von Energie von einem Motor (14) zu einer Materialfördereinrichtung (28), die eingangsseitig mit einem Aufnahmegerät (20) für stückiges Material (m) und ausgangsseitig mit einem Behälter (36) verbunden ist, wobei ein Grundrahmen (18) vorgesehen ist, **dadurch gekennzeichnet, dass** zumindest einige der Komponenten mit einem Träger (40) zusammengefasst sind zu einer Baueinheit (42), die zwischen einer Arbeitsstellung und einer für Justierarbeiten geeigneten Zugangsstellung um eine am Grundrahmen (18) angebrachte Drehsachse (44) schwenkbar ist.

2. Einrichtung nach Anspruch 1, **dadurch gekennzeichnet, dass** die Drehachse (44) vertikal ausgerichtet ist.

3. Einrichtung nach Anspruch 1 oder 2, **dadurch gekennzeichnet, dass** die Baueinheit (42) ein elastisches Verbindungselement (52) zur Übertragung der Drehenergie des Motors (14) auf eine (76; 120) der Komponenten umfasst.

4. Einrichtung nach Anspruch 3, **dadurch gekennzeichnet, dass** das elastische Verbindungselement (52) allseitig elastisch ist und insbesondere einen Gummikörper besitzt.

5. Einrichtung nach Anspruch 4, **dadurch gekennzeichnet, dass** das elastische Verbindungselement (52) eine Reifenkupplung ist.

6. Einrichtung nach einem der Ansprüche 3 bis 5, **dadurch gekennzeichnet, dass** das elastische Verbindungselement (52) über eine Profilhülse (48) mit der Achse (46) des Motors (14) in Verbindung bringbar, vorzugsweise auf der Achse (46) aufsteckbar ist.

7. Einrichtung nach einem der Ansprüche 3 bis 6, **dadurch gekennzeichnet, dass** das elastische Verbindungselement (52) in einem Gehäuse (86) angeordnet ist, das am Träger (40) befestigt ist.

8. Einrichtung nach einem der Ansprüche 1 bis 7, **dadurch gekennzeichnet, dass** der Träger (40) in der Arbeitsstellung am Grundrahmen (18, 94, 96, 98) fixierbar ist.

9. Einrichtung nach Anspruch 8, **dadurch gekennzeichnet, dass** zur Fixierung mindestens ein Zentrierbolzen (100) vorgesehen ist, der in der Arbeitsstellung in ein Zentrierloch eingreift und dort verschraubbar ist.

10. Einrichtung nach einem der Ansprüche 1 bis 9, **dadurch gekennzeichnet, dass** an der Baueinheit (42) eine Schutzeinrichtung (81), vorzugsweise in Form eines Gitters, angeordnet ist.

11. Einrichtung (38) nach einem der Ansprüche 3 bis 10, **dadurch gekennzeichnet, dass** am Träger (40) ein Keilriemengetriebe (60) angeordnet ist, das einerseits über das elastische Verbindungselement (52) mit dem Motor (14) verbindbar ist und das andererseits über eine Gelenkwelle (82) mit der Materialfördereinrichtung (28) in Verbindung steht (Fig. 1).

12. Einrichtung nach Anspruch 11, **dadurch gekennzeichnet, dass** die Drehachse (44) zwischen den beiden Achsen (54, 78) der Keilriemenscheiben (58, 74) des Keilriemengetriebes (60) am Träger (40) befestigt ist (Fig. 1).

13. Einrichtung nach Anspruch 11 oder 12, **dadurch gekennzeichnet, dass** zum Ingangsetzen und Abschalten des Keilriemengetriebes (60) eine elektromagnetische Kupplung (62) vorgesehen ist, die bevorzugt an der ersten Keilriemenscheibe (58) angeordnet ist (Fig. 1 ).

14. Einrichtung (38) nach einem der Ansprüche 3 bis 10, **dadurch gekennzeichnet, dass** am Träger (40) eine Ölpumpe (120) angeordnet ist, die über das elastische Verbindungselement (52) mit dem Motor (14) verbindbar und die über Versorgungsleitungen (114, 116) an einen Ölmotor (112) angeschlossen ist, der zum Antrieb der Materialfördereinrichtung (28) vorgesehen ist (Fig. 2).

15. Einrichtung nach Anspruch 14, **dadurch gekennzeichnet, dass** der Ölmotor (112) über eine elastische Kupplung (110) an die Materialfördereinrichtung (28) angeschlossen ist (Fig. 2).

16. Einrichtung nach einem der Ansprüche 1 bis 15, **dadurch gekennzeichnet, dass**
a) das Antriebsaggregat eines Traktors als Motor (14),
b) eine Turbine zum Fördern von Grasschnitt oder Laub als Materialfördereinrichtung (28) und/oder
c) ein Mähwerk bzw. ein Laubsauger als Aufnahmegerät (20)
vorgesehen ist.
